# EUROPÄISCHE PATENTSCHRIFT

(11) **EP 1 035 944 B1**
(45) Veröffentlichungstag und Bekanntmachung des Hinweises auf die Patenterteilung: **13.02.2002**
(21) Anmeldenummer: 98958926.2
(22) Anmeldetag: 27.11.1998
(51) Int. Cl.: B23Q 3/18

(54) **VORRICHTUNG UND VERFAHREN ZUM KORRIGIEREN VON RUNDLAUFFEHLERN**
DEVICE AND METHOD FOR CORRECTING ROTATING FAULTS
DISPOSITIF ET PROCEDE POUR LA CORRECTION DE FAUX-RONDS

(30) Priorität: 02.12.1997 DE 19753426
(43) Veröffentlichungstag der Anmeldung: 20.09.2000
(73) Patentinhaber: Kaspar Walter GmbH & CO. KG Maschinenfabrik, 81379 München (DE)
(72) Erfinder: ETTELBRÜCK, Rüdiger, D-85609 Aschheim (DE)
(74) Vertreter: Müller . Hoffmann & Partner Patentanwälte
(86) Internationale Anmeldenummer: EP9807688
(87) Internationale Veröffentlichungsnummer: WO9928080

(56) Entgegenhaltungen:
- EP-A- 0 324 222
- EP-A- 0 350 799
- DD-A- 146 266
- PATENT ABSTRACTS OF JAPAN vol. 15, no. 303 (M-1142), 2. August 1991 & JP 03 111148 A (OKUMA MACH WORKS LTD), 10. Mai 1991
- PATENT ABSTRACTS OF JAPAN vol. 98, no. 1, 30. Januar 1998 & JP 09 225767 A (HITACHI LTD), 2. September 1997
- PATENT ABSTRACTS OF JAPAN vol. 10, no. 353 (M-539), 28. November 1986 & JP 61 152353 A (NTN TOYO BEARING CO LTD), 11. Juli 1986

## Beschreibung

Die Erfindung betrifft eine Vorrichtung zum Korrigieren von Rundlauffehlern bei der Fertigung von Rundteilen gemäß dem Oberbegriff von Patentanspruch 1 sowie ein entsprechendes Verfahren.

Bei derartigen Rundteilen handelt es sich beispielsweise um Tiefdruckzylinder, an die zur Erzielung einer hohen Druckqualität höchste Anforderungen hinsichtlich der Oberflächengüte und Formgenauigkeit zu stellen sind. Vorzugsweise wird die Formgenauigkeit durch Bearbeitung mit Diamantwerkzeugen im Dreh- oder Fräßverfahren hergestellt. Die Oberflächengüte kann durch Schleifen mit speziellen Schleifsteinen erreicht werden.

Bei den genannten Bearbeitungsverfahren besteht das Problem, daß der Druckzylinder an seinen Achsenden nie so präzise eingespannt werden kann, daß seine Längsachse mit der Maschinenachse, d. h. Spindelachse, zusammenfällt. Vielmehr besteht immer ein bestimmter Versatz zwischen den beiden Achsen, was bei nachfolgender Bearbeitung des Druckzylinders zu einer Exzentrizität der Zylinderaußenkontur bezüglich der Zylindermittelachse führt.

Aus der US 3,177,742 ist eine Vorrichtung zum Korrigieren von Rundlauffehlern bei der Fertigung von Rundteilen bekannt. Die Rundteile werden über einen aufwendigen Spannmechanismus an einer Spindel gehalten, wobei in dem Spannmechanismus mehrere Keile vorgesehen sind, die ein Zentrierstück an einem Tragelement halten. Rundlauffehler können dadurch ausgeglichen werden, daß einzeine, die Keile durchdringende Schrauben angezogen und andere gelockert werden, wodurch kleinste Relativbewegungen zwischen dem Tragelement und dem Zentrierstück quer zu der Mittelachse des Rundteils erreicht werden. Die Verstellung der Keile ist vom Bediener durchzuführen und sehr zeitaufwendig.

In der DE 1 962 877 wird eine andere Vorrichtung zum Korrigieren von Rundlauffehlern beschrieben, bei der das Rundteil direkt gegenüber dem Spannfutter verschiebbar ist, indem das Rundteil während seiner Umdrehung gegen ein in seinen Bewegungsweg eingefahrenes Stellglied bewegt wird. Dabei schleift das Rundteil an der Stirnfläche des Stellglieds entlang, wodurch seine Oberfläche beschädigt werden kann.

Eine andere Vorrichtung zum Zentrieren von Rundteilen ist aus der DE 1 003 008 bekannt, bei der ein Rundteil auf einem höhenverstellbaren Auflageprisma aufliegt. Das Auflageprisma ist über einen Schneckentrieb höhenbeweglich, wodurch sich die Mittelachse des Rundteils mit der Mittelachse einer Drehbank in Übereinstimmung bringen läßt.

Aus der EP-A-0 350 799 ist eine Vorrichtung zum Korrigieren von Rundlauffehlern bei der Fertigung von Rundteilen bekannt, bei der ein Stellglied einen Kraftstoß erzeugt, der senkrecht zur Spindelachse auf das zu zentrierende Rundteil wirkt. Durch die Einwirkung des Stellglieds besteht die Gefahr, daß das Rundteil durch Kratzen des SteIlglieds an den Spannflächen beschädigt wird.

Der Erfindung liegt die Aufgabe zugrunde, eine Vorrichtung und ein Verfahren anzugeben, mit dem Rundlauffehler, die sich durch einen Versatz der Maschinenachse relativ zu der Rundteilachse ergeben, in einfacher Weise derart korrigierbar sind, daß der Rundlauffehler unter einer vorbestimmbaren Toleranzgrenze liegt.

Erfindungsgemäß wird die Aufgabe durch eine Vorrichtung gemäß Anspruch 1 und durch ein Verfahren gemäß Anspruch 6 gelöst.

Eine erfindungsgemäße Vorrichtung zum Korrigieren von Rundlauffehlern bei der Fertigung von Rundteilen weist eine drehend antreibbare Spindel und ein an der Spindel befestigtes und ein Rundteil aufnehmendes Spannfutter auf, eine Meßeinrichtung zum Bestimmen eines Rundlauffehlers des Rundteils relativ zu der Spindelachse vorgesehen ist; und wobei in Abhängigkeit von dem Meßergebnis der Meßeinrichtung ein Stellglied zur Erzeugung eines definierten Kraftstoßes senkrecht zur Spindelachse ansteuerbar ist; wobei der Kraftstoß auf das Spannfutter wirkt; und wobei das Spannfutter auf der Spindel senkrecht zur Spindelachse durch Beaufschlagung mit dem Kraftstoß verschiebbar ist.

Dabei ist es besonders zweckmäßig, wenn die Meßeinrichtung eine Wegmeßeinrichtung zum Messen der Exzentrizität eines Bereichs des Rundteils ist. Dieser Bereich kann z. B. ein oder beide Achsenden des Rundteils sein, an dem das Rundteil später gelagert werden soll.

Die Meßeinrichtung dient zum Bestimmen der Lage und des Ausmaßes des Rundlauffehlers. Die Lage kann zum Beispiel durch den Winkel festgelegt werden, den der maximale Rundlauffehler bzw. die maximale Exzentrizität bezüglich einer Ausgangsstellung einnimmt. Dazu wird das zu bearbeitende Rundteil zunächst im Spannfutter eingespannt und einmalig oder mehrmals mit niedriger Geschwindigkeit gedreht. In Abhängigkeit von dem Meßergebnis wird ein Stellglied angesteuert, das die definierte Kraft auf das Spannfutter ausübt und somit das Spannfutter relativ zur Spindel verschiebt. Die Kraft sollte vorzugsweise als Kraftstoß erzeugt werden, um eine hämmernde Bewegung auf das Spannfutter wirken lassen zu können. Das Stellglied sollte das Spannfutter genau an der Stelle beaufschlagen, das den größten Rundlauffehler aufweist.

Bei einer bevorzugten Ausführungsform weist das Stellglied einen hydraulisch oder elektrisch betätigbaren Stößel auf. Dadurch läßt es sich zum einen sehr schnell ansteuern und ist zum anderen in der Lage, die erforderliche Kraft zur Verfügung zu stellen.

Eine besonders vorteilhafte Ausführungsform der Erfindung ist dadurch gekennzeichnet, daß das Spannfutter eine innenkonusförmige Aufnahme trägt, durch die Rundteile unterschiedlicher Durchmesser aufspannbar sind. Dies hat den Vorteil, daß auch für unterschiedliche Rundteile immer das gleiche Spannfutter verwendet werden kann, ohne daß das Spannfutter selbst verändert werden muß. Dadurch sind erhebliche Zeitvorteile bei der Serienfertigung möglich.

Eine besonders vorteilhafte Ausführungsform der Erfindung ist dadurch gekennzeichnet, daß die Vorrichtung für ein Rundteil ausgebildet ist, welches ein Druckzylinder ist, an dessen Achsenden jeweils eine Lagerstelle vorgesehen ist, und daß die Meßeinrichtung zum Bestimmen des Rundlauffehlers der Lagerstellen ausgebildet ist. Indem nämlich die späteren Lagerstellen gegenüber der Spindelachse konzentrisch ausgerichtet werden, wird auch zwangsläufig die zu bearbeitende Außenkontur konzentrisch zu den Lagerstellen bearbeitet, so daß sich der Rundlauffehler des Druckzylinders nach Einbau in eine Druckmaschine minimieren läßt.

Ein erfindungsgemäßes Verfahren zum Korrigieren von Rundlauffehlern bei der Fertigung von Rundteilen weist die Schritte auf:
a) Bereitstellen einer oben beschriebenen, erfindungsgemäßen Vorrichtung;
b) Einspannen des Rundteils in das Spannfutter;
c) Langsames Drehen des Spannfutters mit dem Rundteil und Messen des Rundlauffehlers des Rundteils relativ zu der Spindelachse während einer Umdrehung oder mehreren Umdrehungen des Rundteils;
d) Ermitteln des Bereichs des Rundteils mit der größten Exzentrizität gegenüber der Spindelachse;
e) Weiterdrehen des Rundteils, bis sich der Bereich größter Exzentrizität gegenüber dem Stellglied befindet;
f) Betätigen des SteIlglieds;
g) Wiederholen der Schritte c) bis f), bis in Schritt c) ein Rundlauffehler gemessen wird, der unterhalb einer vorbestimmten Toleranzgrenze liegt.

Durch das erfindungsgemäße Verfahren ist es möglich, mehrmals die tatsächlichen Rundlauffehler - beispielsweise der Lagerstellen des Rundteils - zu bestimmen und jeweils durch Betätigen des Stellglieds zu korrigieren. Erst wenn der gemessene Rundlauffehler, d.h. die tatsächliche Exzentrizität einen vorbestimmten Toleranzwert nicht mehr überschreitet, ist der Korrekturvorgang beendet und es kann mit der eigentlichen Bearbeitung begonnen werden.

Diese und weitere Vorteile und Merkmale der Erfindung werden nachfolgend anhand eines Beispiels unter Zuhilfenahme der begleitenden Figuren näher erläutert.

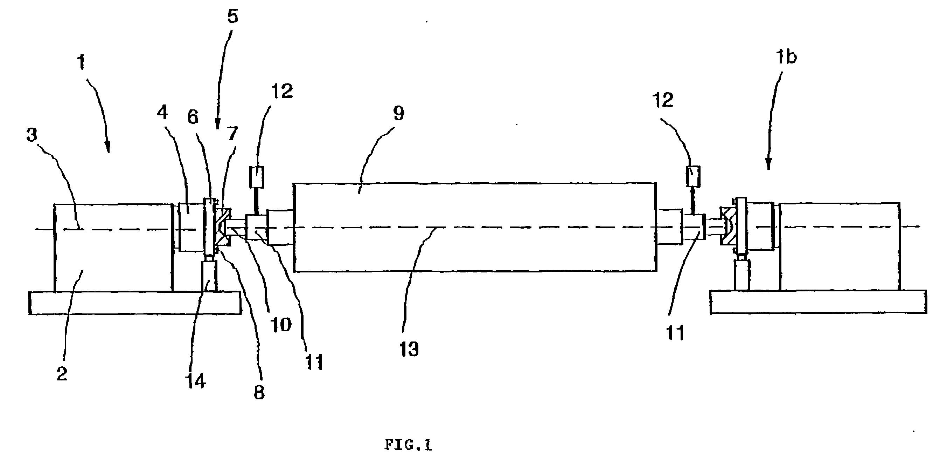

Die einzige Figur zeigt eine Seitenansicht der erfindungsgemäßen Vorrichtung, hier im Einsatz bei einer Drehbank.

Die erfindungsgemäße Vorrichtung 1 weist einen nicht näher dargestellten Antrieb 2 auf, der eine schematisch durch ihre Achse 3 angedeutete Spindel antreibt.

Auf einem Spindelende 4 ist ein Spannfutter 5 befestigt, das ein auf der zu der Spindelachse 3 senkrecht stehenden Stirnfläche des Spindelendes 4 planverschiebliches Aufnahmeteil 6 sowie eine an dem Aufnahmeteil 6 befestigte Konusaufnahme 7 aufweist.

Das Aufnahmeteil 6 ist mittels Schrauben 8 auf der Stirnseite des Spindelendes 4 befestigt. Die Schrauben 8 sind mit einem definierten Anzugsmoment angeschraubt, um in der Berührfläche zwischen Spindelende 4 und Aufnahmeteil 6 eine definierte Haftreibung quer zur Spindelachse 3 zu erzeugen. Durch Aufbringen einer definierten Kraft quer zur Spindelachse 3 auf das Aufnahmeteil 6, die größer ist als die Haftreibung, läßt sich das Aufnahmeteil 6 relativ zum Spindelende 4 verschieben.

Um die Haftreibung präzise einstellen zu können, ist es empfehlenswert, spezielle Dehnschrauben zu verwenden oder mittels mit den Schrauben 8 zusammenwirkenden Federn eine Kennlinie zu erzeugen, mit der die Einstellung der die Reibkraft erzeugenden Axialkraft einfach möglich ist.

Alternativ zu der Verbindung mit den Schrauben 8 kann das Aufnahmeteil 6 auf dem Spindelende 4 auch magnetisch gehalten werden.

Gegenüber von der Vorrichtung 1 ist eine praktisch baugleiche Vorrichtung 1b aufgebaut. Zwischen den erfindungsgemäßen Vorrichtungen 1 und 1b ist ein ein Rundteil darstellender Druckzylinder 9 eingespannt. Der Druckzylinder 9 wird an den stirnseitigen Umlaufkanten durch die Konusaufnahme 7 gehalten. Die Konusaufnahme 7 ist geeignet, verschiedene Druckzylinder 9 mit Achsenden 10 unterschiedlicher Durchmesser in kürzester Zeit einzuspannen. Dadurch läßt sich erhebliche Arbeitszeit zur Umstellung der Vorrichtung sparen. Auf die Achsenden 10 des Druckzylinders 9 sind jeweils Laufringe 11 aufgeschoben, die meist als Innenringe von Rollenlagern ausgebildet sind.

Gegenüber von den Laufringen 11 sind jeweils Meßeinrichtungen 12 angeordnet, die bei Drehung des Druckzylinders 9 einen durch Exzentrizität und Winkellage der Exzentrizität bestimmten Rundlauffehler feststellen, der sich durch einen Versatz der Spindelachse 3 und einer Zylinderachse 13 ergibt. Bereits mit einer Umdrehung des Druckzylinders 9 kann die Meßeinrichtung 12 ein Protokoll erstellen, in welcher Winkelstellung die Außenkontur des Laufrings 11 welche Exzentrizität gegenüber der Spindelachse 3 einnimmt.

Durch eine nicht dargestellte Steuerung wird in Abhängigkeit von dem Meßergebnis der Druckzylinder 9 durch den Antrieb 2 so gedreht, daß die Stelle mit der größten Exzentrizität des Laufrings 11 gegenüber einem Stellglied 14 steht. In der Figur bedeutet das, daß die Stelle der größten Exzentrizität nach unten ausgerichtet sein muß.

Danach gerät der Antrieb in Stillstand und das Stellglied 14 übt eine definierte Kraft auf das Aufnahmeteil 6 aus, die so groß sein muß, daß sie die Haftreibung zwischen dem Aufnahmeteil 6 und dem Spindelende 4 überwindet. Dadurch wird das Aufnahmeteil 6 relativ zum Spindelende 4 verschoben und die Exzentrizität des Laufrings 11 vermindert.

Besonders vorteilhaft ist es dabei, wenn das Stellglied 14 wie ein Hammer wirkt und pulsende Kraftstöße auf das Aufnahmeteil 6 ausübt.

Nach Betätigung des Stellglieds 14 wird der Druckzylinder 9 durch den Antrieb 2 gedreht und erneut eine Messung durchgeführt. Sollte sich die dann gemessene Exzentrizität weiterhin außerhalb einer zulässigen Toleranz befinden, wird erneut das Stellglied 14 angesteuert, um den Rundlauffehler zu beheben. Erst nachdem die Messung ergibt, daß der Rundlauffehler unterhalb der vorgegebenen Toleranz liegt, ist das Verfahren beendet, und es kann mit der eigentlichen Bearbeitung des Druckzylinders 9 begonnen werden.

Das Stellglied 14 weist einen Stößel auf, der vorzugsweise hydraulisch oder elektrisch bzw. elektromagnetisch betätigbar ist und somit schnell und mit der erforderlichen großen Kraft agieren kann.

Bei der Meßeinrichtung 12 handelt es sich um eine Wegmeßeinrichtung, die entweder mittels eines auf dem Laufring 11 schleifenden Fühlers oder berührungslos den Abstand zwischen der Meßeinrichtung 12 und der Außenfläche des Laufrings 11 ermittelt.

Die nicht dargestellte Steuerung koordiniert die Meß- und Einstellvorgänge derart, daß die Rundlauffehler ohne Zutun des Bedieners automatisch korrigiert werden können. Dadurch lassen sich erheblich Arbeitszeit und damit Fertigungskosten sparen.

Statt der Konusaufnahme 7 kann der Druckzylinder 9 selbstverständlich auch durch ein übliches Backenfutter eingespannt werden. Außer dem Druckzylinder 9 können auch andere Rundteile zentriert werden, bei denen eine exakte Konzentrizität zwischen der Außenkontur und der Mittelachse erforderlich ist.

Die Messung und Ausrichtung der beiden Laufringe 11 auf einem Druckzylinder kann nacheinander, abwechselnd oder zeitgleich erfolgen. Es ist selbstverständlich, daß die Messung auch direkt am Druckzylinder, ohne aufgesetzte Laufringe erfolgen kann.

## Patentansprüche

1. Vorrichrung zum Korrigieren von Rundlauffehlern bei der Fertigung von Rundteilen (9), mit einer drehend antreibbaren Spindel (4) und einem an der Spindel befestigten und ein Rundteil (9) aufnehmenden Spannfurter (5), wobei
eine Messeinrichtung (12) zum Bestimmen eines Rundlauffehlers des Rundteils (9) relativ zu der Spindelachse (3) vorgesehen ist; und
in Abhängigkeit von dem Messergebnis der Messeinrichtung (12) ein Stellglied (14) zum Erzeugen eines definierten Kraftstoßes senkrecht zur Spindelachse (3) ansteuerbar ist;
**dadurch gekennzeichnet, dass**
der Kraftstoß auf das Spannfutter (5, 6) wirkt; und dass
das Spannfutter (5, 6) auf der Spindel (4) senkrecht zur Spindelachse (3) durch Beaufschlagung mit dem Kraftstoß verschiebbar ist:

2. Vorrichtung nach Anspruch 1, **dadurch gekennzeichnet, dass** das Stellglied (14) einen hydraulisch oder elektrisch betätigbaren Stößel aufweist.

3. Vorrichtung nach einem der vorstehenden Ansprüche, **dadurch gekennzeichnet, dass** die Messeinrichtung (12) eine Wegmesseinrichtung zum Messen der Exzentrizität eines Bereichs des Rundteils (9) ist.

4. Vorrichtung nach einem der vorstehenden Ansprüche, **dadurch gekennzeichnet, dass** das Spannfutter (5, 6) eine innenkonusförmige Aufnahme (7) trägt, durch die Rundteile (9) unterschiedlicher Durchmesser aufspannbar sind.

5. Dreh- oder Schleifvorrichtung, **dadurch gekennzeichnet, dass** zwei Vorrichtungen nach einem der Ansprüche 1 bis 4 einander gegenüberstehend angeordnet sind, so dass das Rundteil (9) zwischen den Vorrichtungen einspannbar ist.

6. Verfahren zum Korrigieren von Rundlauffehlern bei der Fertigung von Rundteilen (9), mit den Schritten:
**a)** Bereitstellen einer Vorrichtung nach einem der Ansprüche 1 bis 4;
**b)** Einspannen des Rundteils (9) in das Spannfutter (5, 6);
**c)** langsames Drehen des Spannfutters (5, 6) mit dem Rundteil (9) und Messen des Rundlauffehlers des Rundteils (9) relativ zu der Spindelachse (3) während einer Umdrehung oder mehreren Umdrehungen des Rundteils (9) ;
**d)** Ermitteln des Bereichs des Rundteils mit der größten Exzentrizität gegenüber der Spindelachse (3);
**e)** Weiterdrehen des Rundteils (9), bis sich der Bereich größter Exzentrizität gegenüber dem Stellglied (14) befindet;
**f)** Betätigen des Stellglieds (14);
**g)** Wiederholen der Schritte c) bis f), bis in Schritt c) ein Rundlauffehler gemessen wird, der unterhalb einer vorbestimmten Toleranzgrenze liegt.

## Claims

1. A device for correcting eccentricity occurring in the fabrication of round parts (9), comprising a rotationally drivable spindle (4) and a chuck (5) fixed to said spindle and receiving a round part (9) therein, wherein
a measuring means (12) is provided for determining an eccentricity of the round part (9) relative to the axis (3) of the spindle; and
an actuator (14) can be actuated as a function of the measuring result of the measuring means (12) to generate a defined impact perpendicular to the axis (3) of the spindle;
**characterized in that**
impact acts upon said chuck (5, 6); and **in that**
said chuck (5,6) can be moved on said spindle (4) perpendicularly to the axis (3) of the spindle by means of abutment with said impact.

2. The device as set forth in claim 1 **characterized in that** said actuator (14) includes a hydraulically or electrically operable ram.

3. The device as set forth in any of the preceding claims, **characterized in that** said measuring means (12) is a path measuring means for measuring the eccentricity of a region of said round part (9).

4. The device as set forth in any of the preceding claims, **characterized in that** said chuck (5, 6) bears an inner cone-shaped receiver (7) for clamping round parts (9) of different diameters.

5. A turning or grinding device, **characterized in that** two devices as set forth in any of claims 1 to 4 are arranged opposite to each other so that the round part (9) can be clamped between said devices.

6. A method for correcting eccentricities occurring in the fabrication of round parts (9), comprising the following steps:
a) placing a device as set forth in any of claims 1 to 4 at disposal;
b) clamping the round part (9) into the chuck (5, 6);
c) slow turning of the chuck (5, 6) including the round part (9) and measuring the eccentricity of said round part (9) relative to the axis (3) of the spindle during one or several rotations of the round part (9);
d) detecting the region of the round part of utmost eccentricity with regard to the axis (3) of the spindle;
e) further rotating the round part (9) until the region of utmost eccentricity faces the actuator (14);
f) actuating the actuator (14);
g) repeating the steps c) to f) until an eccentricity is measured in c) which is below a predetermined tolerance limit.

## Revendications

1. Dispositif pour corriger des faux-ronds lors de la fabrication de pièces rondes (9), comprenant une broche (4) qui est apte à être entraînée en rotation, et un mandrin de serrage (5) qui est fixé à la broche et qui reçoit une pièce ronde (9),
étant précisé qu'il est prévu un dispositif de mesure (12) pour définir un faux-rond de la pièce ronde (9) par rapport à l'axe de broche (3),
et qu'en fonction du résultat de mesure du dispositif de mesure (12), un actionneur (14) est apte à être commandé pour produire une impulsion définie, perpendiculairement à l'axe de broche (3),
**caractérisé en ce que** l'impulsion agit sur le mandrin de serrage (5, 6),
et **en ce que** le mandrin de serrage (5, 6) est apte à être déplacé sur la broche (4), perpendiculairement à l'axe (3) de celle-ci, grâce à l'impulsion.

2. Dispositif selon la revendication 1, **caractérisé en ce que** l'actionneur (14) comporte un piston à commande hydraulique ou électrique.

3. Dispositif selon l'une des revendications précédentes, **caractérisé en ce que** le dispositif de mesure (12) est un dispositif de mesure de déplacement destiné à mesurer l'excentricité d'une zone de la pièce ronde (9).

4. Dispositif selon l'une des revendications précédentes, **caractérisé en ce que** le mandrin de serrage (5, 6) porte un logement en forme de cône intérieur (7) grâce auquel des pièces rondes (9) de diamètres différents peuvent être montés.

5. Dispositif de tournage ou de meulage, **caractérisé en ce que** deux dispositifs selon l'une des revendications 1 à 4 sont disposés face à face de telle sorte que la pièce ronde (9) puisse être serrée entre eux.

6. Procédé pour corriger des faux-ronds lors de la fabrication de pièces rondes (9), qui prévoit
a) la mise en place d'un dispositif selon l'une des revendications 1 à 4 ;
b) le montage de la pièce ronde (9) dans le mandrin de serrage (5, 6) ;
c) la rotation lente du mandrin de serrage (5, 6) avec la pièce ronde (9), et la mesure du faux-rond de celle-ci par rapport à l'axe de broche (3) pendant un ou plusieurs tours de la pièce ronde (9) ;
d) la détermination de la zone de la pièce ronde qui présente la plus grande excentricité par rapport à l'axe de broche (3) ;
e) la poursuite de la rotation de la pièce ronde (9) jusqu'à ce que la zone présentant la plus grande excentricité se trouve en face de l'actionneur (14) ;
f) l'actionnement de l'actionneur (14) ;
g) la reprise des étapes c) à f) jusqu'à ce qu'on mesure lors de l'étape c) un faux-rond qui se trouve au-dessous d'une limite de tolérance prédéfinie.
